# EUROPEAN PATENT APPLICATION

(11) **EP 3 674 795 A1**
(43) Date of publication of application: **01.07.2020**
(21) Application number: 19217552.9
(22) Date of filing: 18.12.2019
(51) Int. Cl.: G03B 21/00, G03B 21/20

(54) **VEHICLE GROUND ILLUMINATION SYSTEM AND VEHICLE WINGLET**

(30) Priority: 18.12.2018 US 201816224041
(71) Applicant: Ficosa North America Corporation, Madison Heights, MI 48071 (US)
(72) Inventor: HELLIN NAVARRO, Sergio, Bloomfield Hills, MI 48301 (US)
(74) Representative: Isarpatent

(57) **Abstract**

A vehicle ground illumination system may include a housing configured to maintain an image projector and a light projector and a controller in communication with the image projector and the light projector. The controller may be configured to instruct the image projector to project an image in an illumination area, and instruct the light projector to project a white light in the illumination area, wherein the white light is projected to at least partially surround the image projector.

## Description

### TECHNICAL FIELD

The present invention relates to a vehicle ground illumination system and vehicle winglet. Disclosed herein are puddle lamps with static and dynamic image projections.

### BACKGROUND

Motor vehicles include various exterior and interior lamps for increasing visibility during non-daylight hours. These lamps may be automatic, and may include head-lamps, interior running lights, etc.

### SUMMARY

A vehicle ground illumination system may include a housing configured to maintain an image projector and a light projector and a controller in communication with the image projector and the light projector. The controller may be configured to instruct the image projector to project an image in an illumination area, and instruct the light projector to project a white light in the illumination area, wherein the white light is projected to at least partially surround the image projector.

A vehicle mirror having a vehicle ground illumination system, e.g. as disclosed above, may include a housing configured to maintain an image projector and a light projector, the image projector having a first light and being arranged within the housing, and configured to project an image in an illumination area, and the light projector having a second light and being arranged within the housing and configured to project a light in the illumination area, wherein the light is projected to at least partially surround the image projector.

### BRIEF DESCRIPTION OF THE DRAWINGS

The embodiments of the present disclosure are pointed out with particularity in the appended claims. However, other features of the various embodiments will become more apparent and will be best understood by referring to the following detailed description in conjunction with the accompanying drawings in which:
Figure 1 illustrates an example lighted system for a vehicle;
Figure 2 illustrates a cut-away view of an example ground illumination system;
Figure 3 illustrates an example perspective view of the illumination area of the ground illumination system of Figure 2;
Figure 4 illustrates an exploded view of the example ground illumination system;
Figure 5 illustrates an exploded view of another example ground illumination system;
Figure 6 illustrates an exploded view of another example ground illumination system;
Figure 7 illustrates an exploded view of another example ground illumination system; and
Figure 8 illustrates an exploded view of another example ground illumination system.

### DETAILED DESCRIPTION

As required, detailed embodiments of the present invention are disclosed herein; however, it is to be understood that the disclosed embodiments are merely exemplary of the invention that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present invention.

Disclosed herein is a ground illumination system for a vehicle that includes a light source configured to emit light. The system includes a reconfigurable display element to project an image in combination with a light projector or laser or PICO projector. The light projection and the image projection may be combined in a single unit wherein an icon or animated image may be projected within an area illuminated by the light source. The logo or image may be customizable during manufacturing.

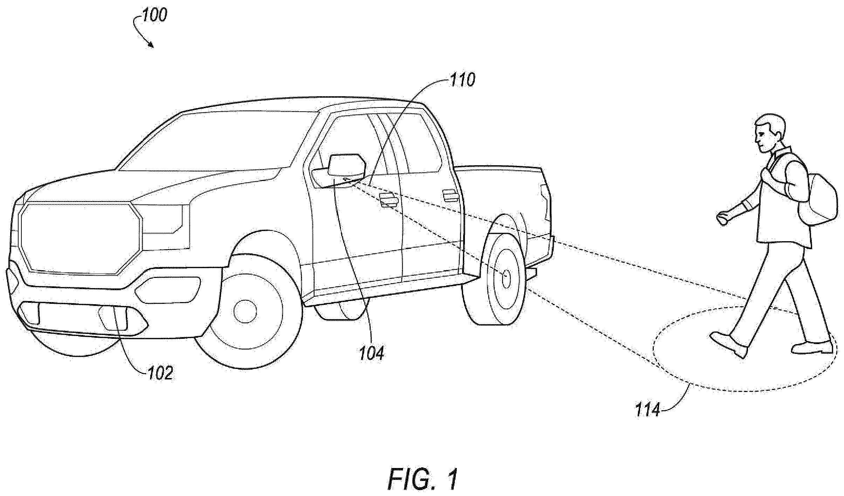

Figure 1 illustrates an example lighted vehicle system 100 for a vehicle 102. The vehicle 102 is illustrated as a truck, but may be any motor passenger vehicle including but not limited to a truck, sport utility vehicle, cross-over, hatchback, station wagon, motorcycle, all-terrain vehicle (ATV), recreational vehicle (RV), boat, plane or other mobile machine for transporting people or goods, etc.

The vehicle 102 may include at least one winglet 104, such as a vehicle mirror (as shown in Figure 1) or camera or radar. The winglet 104 may also be a roof rack, door handle, or other protrusion of the vehicle or vehicle component. The winglet 104 may house a ground illumination system 110 configured to create an illuminated area 114 at or near the vehicle 102. The illuminated portion, referred to herein as the illuminated area 114, may provide a lighted area in front of the vehicle, as well as display an image, such as a logo within the illuminated area 114.

While the light mechanism 110 is described throughout as being arranged on the winglet 104, the light mechanism 110 may also be mounted on other exterior areas of the vehicle 102. For example, the light mechanism 110 may be arranged on a door handle. The light mechanism 110 may be arranged on running boards, mud flaps, roof racks, bumpers, etc. The vehicle 102 may include more than one light mechanism 110. In one example, a light mechanism 110 may be arranged on each side view mirror. A light mechanism 110 may also be arranged on each door handle.

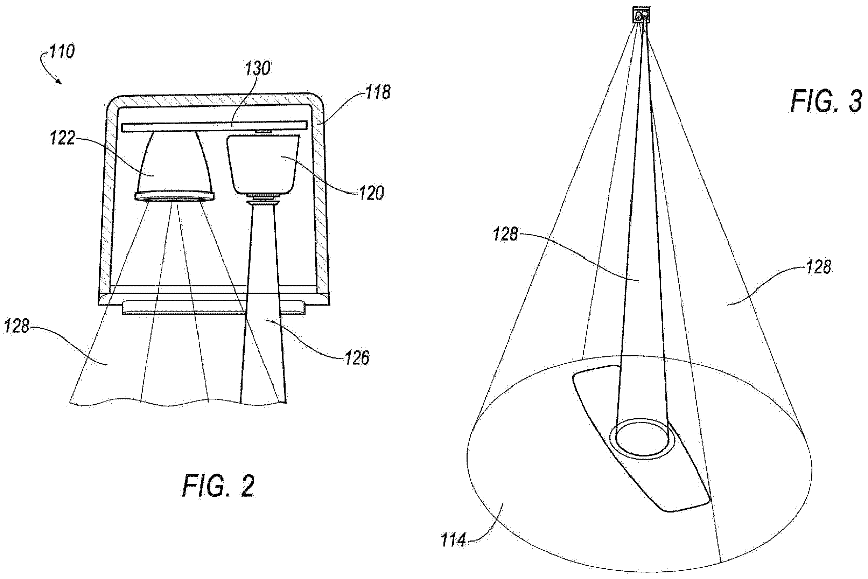

Figure 2 illustrates a cut-away view of the example ground illumination system 110 housed by the winglet 104. The ground illumination system 110 may include a housing 118 configured to maintain, house, or support an image projector 120 and a light projector 122. The image projector 120 may be a light mechanism configured to emit an image projection 126 onto the illumination area 114. The image projection 126 may include a logo or image relating to the vehicle, such as the vehicle's trademark, etc. The image projector 120 may be configured to emit both black and white, as well as colored images, into the illumination area 114.

The light projector 122 may be configured to emit light into the illumination area 114, referred to herein as the light projection 128. This may be intended to light up an area in front of the vehicle as a user approaches the vehicle. The light may include a white light or color light.

The image projector 120 and the light projector 122 may be coupled to a controller 130. The controller 130 may be coupled to a memory (not shown) and may be configured to control the illumination of the image projector 120 and the light projector 122. The controller 130 may include a printed circuit board (PCB) configured to electronically couple the image projector 120 and the light projector 122. The controller 130 or PCB may include a connector or dual wires.

Figure 3 illustrates an example perspective view of the illumination area 114, including the image projection 126 and the light projection 128. As illustrated, the image projection 126 may be at least partially maintained within the light projection 128. The image projection 126 and light projection 128 may be concurrently projected, or each projected individually.

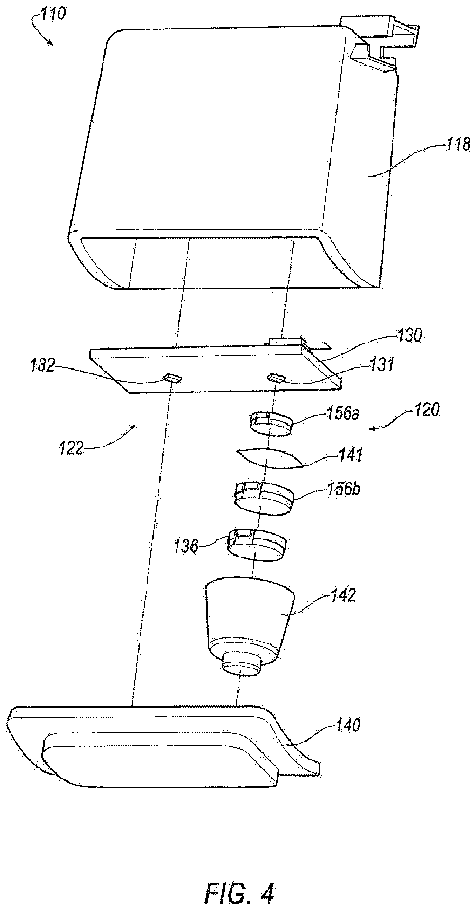

Figure 4 illustrates an exploded view of an example ground illumination system 110. The ground illumination system 110 may include a housing 118 configured to house the controller 130, as well as the image projector 120 and the light projector 122. The housing 118 may be closed by an optical lens 140. The optical lens 140 may reflect or bend the projections generated by the image projector 120 and the light projector 122.

The image projector 120 may include a first light 131 coupled to the controller 130. The first light 131 may be a light emitting diode (LED) or plurality of LEDs configured to emit light. The image projector 120 may also include various filters 136 configured to aid in generating the logo. The optical filters may selectively transmit lights of different wavelengths. For example, the image projector 120 may include a color filter configured to generate a color logo or image. The filters may be absorptive or dichroic. The filters may be selected during manufacturing depending on the type of image to be projected.

The image projector 120 may include a first optical lens 156a and a film 141 having an outline of an image. The film 141 may allow certain light to pass through the film 141, while blocking other light, in order to generate the image. This film 141 may be interchangeable at the manufacturing stages in order to customize the image for each vehicle. The film 141 and filters 136 may be arranged and maintained in an optical assembly 142. The optical assembly 142 may then be locked into place within the housing 118 by the lens 140. The image projector 120 may also include a second optical lens 156b followed by a filter 136.

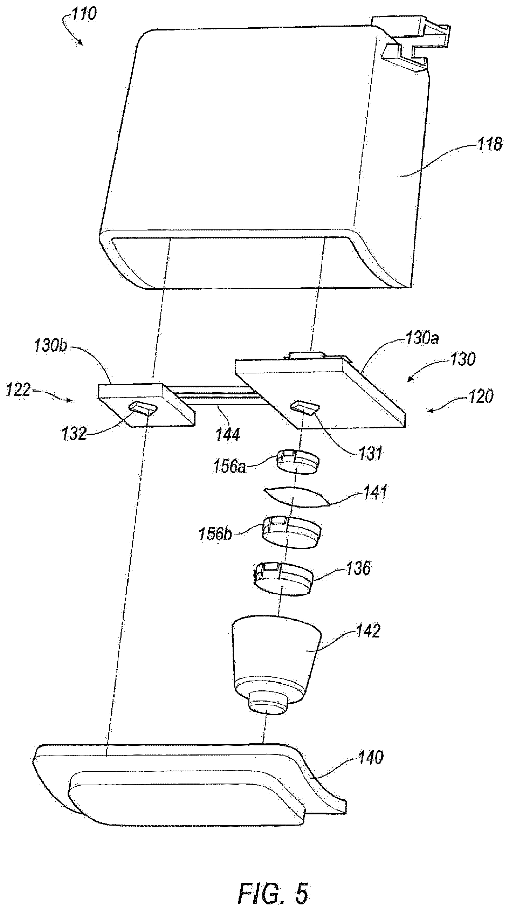

Figure 5 illustrates an exploded view of another example ground illumination system 110. In this system 110, the controller 130 may be formed of a first controller 130a and a second controller 130b. The two controllers 130a, 130b are interconnected by wired connections 144, which may include a pair of cables, terminals or flexible circuits, configured to pass power from the first controller 130a to the second controller 130b. The first controller 130a may be configured to control and power the first light 131, as well as the other components of the image projector 120. The second controller 130b may be configured to power and control a second light 132 and the light projector 122.

The light projector 122 may include the second light 132. The second light 132 may be a light, an LED or plurality of LEDs configured to emit light, similar to the first light 131. In one example, the second light 132 may be a white LED configured to emit substantially white light. The first light 131 may include any one of a color light, wherein a white LED may pass through various filters 136.

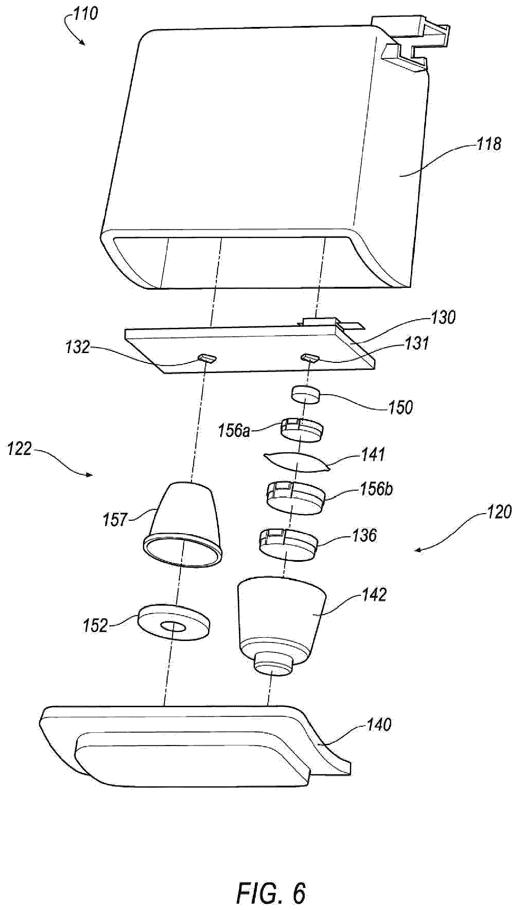

Figure 6 illustrates an exploded view of another example ground illumination system 110. In this example, the image projector 120 may include a remote phosphor filter 150. Remote phosphor filters 150 may combine with the first light 131 to enhance the color projection of the image. The image projector 120 may also include an optical lens 156a, 156b arranged after the remote phosphor filter 150.

The light projector 122 may also include a reflector 157 with a remote phosphor filter 152. This may allow the light projection to alter in color and brightness. The light may pass through the remote phosphor filter 152 to change the color.

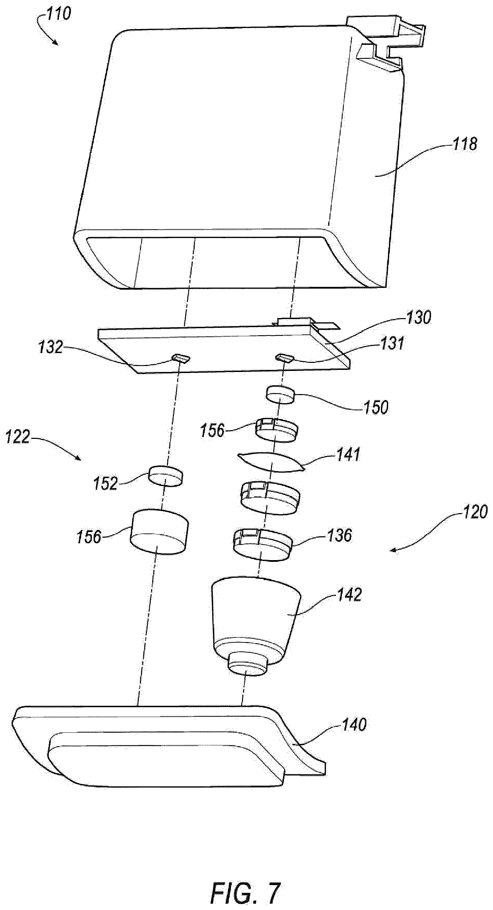

Figure 7 illustrates an exploded view of another example ground illumination system 110. In this example, the light projector 122 may include a remote phosphor filter 152 and an optical lens 156. The optical lens 156 may aid in bending the light to create the light projection 128. In the examples where the phosphor filter is included, the phosphor filter 152 may be mounted on the lens 156. This may be the case for each of the image projector 120 and the light projector 122.

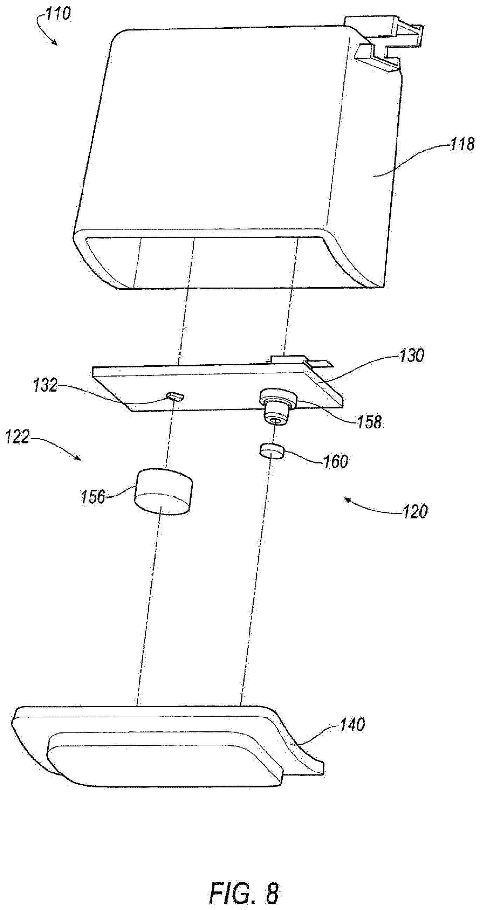

Figure 8 illustrates an exploded view of another example ground illumination system 110. In this example, the image projector 120 may include a laser projector 158 and a diffracted lens 160. The laser projector 158 may project light and/or images for the image projection 126. The diffracted lens 160 may include the logo to be projected and may diffract the light provided by the laser projector 158 to display the image.

Although not specifically shown, the image projector 120 may also include a PICO projector module in lieu of the laser projector 158 of Figure 8. The PICO projector may emit an image for the image projection 126.

The system 110 may include the housing 118 capped at the bottom by the outer optical lens. A housing cover may be arranged at the top of the housing. The housing cover may include ribs disposed in a circular axis to radiate heat from the first light and second light. A gasket may be arranged between the housing 118 and the housing cover, and may maintain some of the components within the housing 118 at a fixed location. The first controller 130a and second controller 130b, may be arranged within the housing 118. The second controller 130b may be aluminum to aid in dissipating heat from the white LED of the second light 132. The housing 118 may also house at least one of the optical lenses 156. In some examples, two, three, or more, optical lenses 156 may be included in the system 110. The film 141, hosting the image or logo, may also be included.

In one example, the film 141 and optical lens 156 may include a pair of collimating lenses followed by the film 141, followed by a focusing lens (not shown). The housing 118 may be enclosed by the housing cover and the outer optical lens 140. Further, the housing 118, outer optical lens 140, and housing cover may be hermetically sealed in order to protect the elements therein. The housing cover and lens may be over-molded to the housing 118 in order to hermetically seal the housing 118 and protect the elements therein. This may allow multiple materials to be sealed and assembled and decrease tooling and assembly time.

Computing devices described herein generally include computer-executable instructions, where the instructions may be executable by one or more computing or hardware devices, such as those listed above. Computer-executable instructions may be compiled or interpreted from computer programs created using a variety of programming languages and/or technologies, including, without limitation, and either alone or in combination, Java™, C, C++, Visual Basic, Java Script, Perl, etc. In general, a processor (e.g., a microprocessor) receives instructions (*e.g.*, from a memory, a computer-readable medium, etc.) and executes these instructions, thereby performing one or more processes, including one or more of the processes described herein. Such instructions and other data may be stored and transmitted using a variety of computer-readable media.

While exemplary embodiments are described above, it is not intended that these embodiments describe all possible forms of the invention. Rather, the words used in the specification are words of description rather than limitation, and it is understood that various changes may be made without departing from the spirit and scope of the invention. Additionally, the features of various implementing embodiments may be combined to form further embodiments of the invention.

Further Embodiments:
1. A vehicle ground illumination system, comprising:
   a housing configured to maintain an image projector and a light projector;
   a controller in communication with the image projector and the light projector, and configured to:
      instruct the image projector to project an image in an illumination area; and
      instruct the light projector to project a white light in the illumination area, wherein the white light is projected to at least partially surround the image projector.
2. The system of embodiment 1, wherein the controller includes a first controller configured to control the image projector and a second controller configured to control the light projector.
3. The system of embodiment 2, wherein the image projector includes a first light and the light projector includes a second light, the first controller being coupled to the first light of the image projector and the second controller being coupled to the second light of the light projector.
4. The system of embodiment 2, wherein the first and second controllers are coupled to each other via a wired connection.
5. The system of embodiment 1, wherein the image projector includes a laser projector.
6. The system of embodiment 1, wherein the image projector includes a PICO projector.
7. The system of embodiment 1, wherein the image projector includes a color filter.
8. The system of embodiment 1, wherein the image projector includes a remote phosphor filter and a diffractor lens.
9. The system of embodiment 1, wherein the image projector includes a film hosting the image.
10. The system of embodiment 1, wherein the light projector includes a light emitting diode.
11. The system of embodiment 1, wherein the light projector includes an optical lens.
12. The system of embodiment 1, wherein the light projector includes a remote phosphor filter.
13. A vehicle winglet having a vehicle ground illumination system, comprising:
   a housing configured to maintain an image projector and a light projector;
   the image projector having a first light and being arranged within the housing, and configured to project an image in an illumination area; and
   the light projector having a second light and being arranged within the housing and configured to project a light in the illumination area, wherein the light is projected to at least partially surround the image projector.
14. The winglet of embodiment 13, further comprising a controller in communication with each of the image projector and light projector, wherein the controller is configured to provide power to the image projector and light projector.
15. The winglet of embodiment 14, wherein the controller includes a first controller configured to control the image projector and a second controller configured to control the light projector.
16. The winglet of embodiment 15, wherein the first and second controllers are coupled to each other via a wired connection.
17. The winglet of embodiment 13, wherein the image projector includes at least one of a laser projector, a PICO projector, a color filter, a remote phosphor filter and a diffractor lens, and a film hosting the image.
18. The winglet of embodiment 13, wherein the light projector includes a white light emitting diode.
19. The winglet of embodiment 13, wherein the light projector includes an optical lens and a remote phosphor filter.

**List of used reference signs**

| | |
|---|---|
| lighted vehicle system | 100 |
| vehicle | 102 |
| winglet | 104 |
| ground illumination system | 110 |
| illuminated area | 114 |
| housing | 118 |
| image projector | 120 |
| light projector | 122 |
| image projection | 126 |
| light projection | 128 |
| controller | 130 |
| first controller | 130a |
| second controller | 130b |
| first light | 131 |
| second light | 132 |
| filter | 136 |
| optical lens | 140 |
| film | 141 |
| optical assembly | 142 |
| connections | 144 |
| remote phosphor filter | 150 |
| remote phosphor filter | 152 |
| first optical lens | 156a |
| second optical lens | 156b |
| reflector | 157 |
| laser projector | 158 |
| diffracted lens | 160 |

## Claims

1. A vehicle ground illumination system (100), comprising:
a housing (118) configured to maintain an image projector (120) and a light projector (122);
a controller (130, 130a, 130b) in communication with the image projector and the light projector (122), and configured to:
instruct the image projector (120) to project an image in an illumination area (114); and
instruct the light projector (122) to project a white light in the illumination area (114), wherein the white light is projected to at least partially surround the image projector (120).

2. The system according to claim 1, wherein the controller (130, 130a, 130b) includes a first controller (130a) configured to control the image projector (120) and a second controller (130b) configured to control the light projector (122).

3. The system according to any of the preceding claims wherein the image projector (120) includes a first light (131) and the light projector (122) includes a second light (132), the first controller (130a) being coupled to the first light (131) of the image projector (122) and the second controller (130b) being coupled to the second light (132) of the light projector (122).

4. The system according to any of the preceding claims, wherein the first and second controllers (130a, 130b) are coupled to each other via a wired connection (144).

5. The system according to any of the preceding claims, wherein the image projector (120) includes at least one of: a laser projector (158), a PICO projector, and a color filter.

6. The system according to any of the preceding claims, wherein the image projector (120) includes a remote phosphor filter (150) and a diffractor lens (160).

7. The system according to any of the preceding claims, wherein the image projector (120) includes a film (141) hosting the image.

8. The system according to any of the preceding claims, wherein the light projector (122) includes at least one of: a light emitting diode, an optical lens (140), and a remote phosphor filter (152).

9. A vehicle winglet (104) having a vehicle ground illumination system (100), in particular a vehicle ground illumination system (100) according to any of the claims 1 to 8, the vehicle ground illumination system (100) comprising:
a housing (118) configured to maintain an image projector (120) and a light projector (122);
the image projector (120) having a first light (131) and being arranged within the housing (118), and configured to project an image in an illumination area (114); and
the light projector (122) having a second light (132) and being arranged within the housing (118) and configured to project a light in the illumination area (114), wherein the light is projected to at least partially surround the image projector (120).

10. The winglet according to claim 9, further comprising a controller (130, 130a, 130b) in communication with each of the image projector (120) and light projector (122), wherein the controller (130, 130a, 130b) is configured to provide power to the image projector (120) and light projector (122).

11. The winglet according to any of the preceding winglet based claims, wherein the controller (130, 130a, 130b) includes a first controller (130a) configured to control the image projector (120) and a second controller (130b) configured to control the light projector (122).

12. The winglet according to any of the preceding winglet based claims, wherein the first and second controllers (130a, 130b) are coupled to each other via a wired connection (144).

13. The winglet according to any of the preceding winglet based claims, wherein the image projector (120) includes at least one of a laser projector (158), a PICO projector, a color filter, a remote phosphor filter (150) and a diffractor lens (160), and a film (141) hosting the image.

14. The winglet according to any of the preceding winglet based claims, wherein the light projector (122) includes a white light emitting diode.

15. The winglet according to any of the preceding winglet based claims, wherein the light projector (122) includes an optical lens (140) and a remote phosphor filter (152).
